(19) Europäisches Patentamt
European Patent Office
Office européen des brevets

(11) **EP 0 757 077 A1**

(12) **EUROPEAN PATENT APPLICATION**

(43) Date of publication:
**05.02.1997 Bulletin 1997/06**

(51) Int. Cl.$^6$: **C08L 23/16**, C08L 9/00, C08L 91/00

(21) Application number: **95112043.5**

(22) Date of filing: **01.08.1995**

(84) Designated Contracting States:
**BE DE ES FR GB IT NL SE**

(71) Applicant: **Advanced Elastomer Systems, L.P.**
**Akron, Ohio 44311-1059 (US)**

(72) Inventor: **Ouhadi, Trazollah**
**B-4020 Liège (BE)**

(74) Representative: **Weber, Thomas, Dr.Dipl.-Chem.**
**et al**
**Patentanwälte**
**von Kreisler-Selting-Werner,**
**Postfach 10 22 41**
**50462 Köln (DE)**

(54) **Very soft thermoplastic elastomer compositions**

(57) The present invention relates to a soft thermoplastic elastomer composition comprising a blend of

(a) less than about 40% to about 15% by weight, based on the amount of (a)+(b), of at least one thermoplastic polyolefin resin
(b) more than about 60% to about 85% by weight, based on the amount of (a)+(b), of a combination of

(i) at least one at least partially cured rubber selected from monoolefin copolymers and
(ii) at least one at least partially cured rubber selected from homopolymers or copolymers of conjugated dienes, copolymers of a conjugated diene with a monoolefin, and mixtures thereof,

and
(c) about 30% to 70% by weight, based on the amount of (a)+(b)+(c), of at least one processing oil and a method for preparing same.

**Description**

Background of the Invention

Field of the Invention

This invention relates to very soft thermoplastic elastomer compositions and to a method for their manufacture.

Polymer blends which have a combination of both thermoplastic and elastic properties (thermoplastic elastomers, TPE) are generally obtained by combining a thermoplastic polyolefin with an elastomeric composition in a way such that the elastomer is intimately and uniformly dispersed as a discrete particulate phase within a continuous phase of the thermoplastic. Early work with vulcanized compositions is found in US-A-3 037 954 which discloses static vulcanization as well as the technique of dynamic vulcanization wherein a vulcanizable elastomer is dispersed into a resinous thermoplastic polymer and the elastomer is cured while continuously mixing and shearing the polymer blend. The resulting composition is a microgel dispersion of cured elastomer, such as butyl rubber, chlorinated butyl rubber, polybutadiene or polyisobutene in an uncured matrix of thermoplastic polymer such as polypropylene.

There is a big demand, however, for thermoplastic elastomeric compositions which are soft and which possess a good processability.

US-A-4 745 149 describes composition of TPE with block copolymer like SEBS, SIS, SBS as one of the rubber component. These block copolymers are by themselves a TPE and are chemically different from rubber like BR, SBR, NR, etc. These copolymers have different morphology and different physical and mechanical properties. These types of TPEs have several disadvantages such as high compression set and limited application temperatures.

US-A-4 889 888 describes the composition of a TPE with polystyrenic thermoplastic component like PS, impact PS, SAN (which are no rubbers) or a block copolymer SEBS (which is a TPE).

US-A-5 159 016 describes TPE-composition having a high Shore A hardness which are cured with a specific dihydroaromatic curative system which was normally used as antioxidant for rubbers. This general disclosure mentions all the different type of rubbers which are allegedly vulcanized with this specific cure system. It is taught that resin-cured compositions have poor processability (column 2, lines 12-21). Further it is referred to the difficulty of getting good dispersion, important for smooth surfaces, if the ratio of rubber-to-plastic is greater than 60:40 (column 8, lines 10-20).

JP-A-63 083 147 describes the composition of a TPE with different types of rubbers included polyconjugated diene rubbers and using N,N,m-phenylene dimaleimide as curative. Since it is known that this curative cannot react with EPDM/polyconjugated dienes it is assumed that this curative is used as a co-agent with a peroxide.

The very soft TPEs (hardness below 60 shore A) with a polyolefinic thermoplastic such as PP as continuous phase and/or several fully vulcanized rubbers as dispersed phase with good physical properties and good processability are very difficult to make. Only some very soft TPEs based on SEBS, SBS, SIS block copolymer compounds are known. These TPEs with block copolymer possess several weak points like high compression set, low application temperature, etc.

It has now surprisingly been found that thermoplastic elastomer compositions comprising a thermoplastic polyolefin and a specific combination of at least partially cured rubbers yields a very soft product with good processability such as extrusion and injection molding.

In detail the present invention relates to a soft thermoplastic elastomer composition comprising a blend of

(a) less than about 40% to about 15% by weight, based on the amount of (a)+(b), of at least one thermoplastic polyolefin resin

(b) more than about 60% to about 85% by weight, based on the amount of (a)+(b), of a combination of

(i) at least one at least partially cured rubber selected from monoolefin copolymers and
(ii) at least one at least partially cured rubber selected from homopolymers or copolymers of conjugated dienes, copolymers of a conjugated diene with a monoolefin, and mixtures thereof,

and

(c) about 30% to 70% by weight, based on the amount of (a)+(b)+(c) , of at least one processing oil.

Preferably, the rubbers (b)(i) and/or (b)(ii) independently from each other are fully cured.

By the term "very soft" in connection with the TPE compositions of the present invention there is meant a Shore A hardness in the range of about 20 to about 60, preferably about 20 to about 50 and most preferably about 20 to about 45.

The TPE composition of the present invention preferably contains about 35 to about 25 % by weight of the thermoplastic polyolefin resin (a) and about 65 to about 75 % by weight of the combination of rubbers (b), based on the amount of (a)+(b).

The TPE composition of the present invention further preferably contains about 40% to about 60% by weight of a processing oil (c) based on the amount of (a)+(b)+(c) .

The combination of rubbers (b) contains about 10 to about 90 % by weight, preferably about 35 to about 65 % by weight of the monoolefin rubber (i) and about 90 to about 10 % by weight, preferably about 65 to about 35 % by weight of the homopolymer or copolymers of the conjugated diene (ii), based on the amount of (b).

The relative amounts of (a) to (b) and (b)(i) to (b)(ii) are critical because a higher level of (a) will increase the hardness of the composition. A higher level of total rubber (b) will yield a product which is too difficult to make and to process. A too high an amount of (b)(i) will increase the hardness (but less than component (a)) and too high an amount of (b)(ii) will yield a product which is difficult to make and to process.

Description of the Preferred Embodiments

I. Thermoplastic Elastomer Blend

(a) Polyolefin

Polyolefins suitable for use in the thermoplastic elastomer blends of the invention include thermoplastic, crystalline polyolefin homopolymers and copolymers. They are desirably prepared from monoolefin monomers having 2 to 7 carbon atoms, such as ethylene, propylene, 1-butene, isobutylene, 1-pentene, 1-hexene, 1-octene, 3-methyl-1-pentene, 4-methyl-1-pentene, 5-methyl-1-hexene, mixtures thereof and copolymers thereof with (meth)acrylates and/or vinyl acetates. Preferred, however, are monomers having 3 to 6 carbon atoms, with propylene being preferred. As used in the specification and claims the term polypropylene (PP) includes homopolymers of propylene as well as reactor copolymers of polypropylene which can contain about 1 to about 40 % by weight of ethylene or an $\alpha$-olefin comonomer of 4 to 16 carbon atoms, and mixtures thereof. The polypropylene can be highly crystalline isotactic or syndiotactic polypropylene. Commercially available polyolefins may be used in the practice of the invention. Further polyolefins which can be used in terms of the invention are high, low, linear-low, very low density polyethylenes and copolymers of ethylene with (meth)acrylates and/or vinyl acetates.

(b) Olefinic Rubber

According to the present invention a combination of at least partially cured, preferably fully cured rubbers (b)(i) and (b)(ii) is used in the blend with the thermoplastic polyolefin resin (a).

(i) Monoolefin Copolymer Rubber

Suitable monoolefinic copolymer rubbers (elastomers) comprise non-polar, rubbery copolymers of two or more $\alpha$-monoolefins, preferably copolymerized with at least one polyene, usually a diene. Saturated monoolefin copolymer rubber, for example ethylene-propylene copolymer rubber (EPM) can be used. However, unsaturated monoolefin rubber such as EPDM rubber is more suitable. EPDM is a terpolymer of ethylene, propylene and a non-conjugated diene. Satisfactory non-conjugated dienes include 5-ethylidene-2-norbornene (ENB), 1,4-hexadiene, 5-methylene-2-norbornene (MNB), 1,6-octadiene, 2-methyl-1,4-pentadiene, 5-methyl-1,4-hexadiene, 3,7-dimethyl-1,6-octadiene, 1,3-cyclopentadiene, 1,4-cyclohexadiene and dicyclopentadiene (DCPD), 1,5-cyclooctadiene, 1-methyl-1,5-cyclooctadiene.

(ii) Homopolymers and Copolymers of Conjugated Dienes

The conjugated dienes which are used in the homopolymers and copolymers of the rubber (ii) of the present invention are selected from those having 4 to 14 carbon atoms, preferably 4 to 6 carbon atoms, which can be chlorinated or brominated and which can be branched or unbranched.

Preferred examples of the conjugated diene include 1,3-butadiene, 2-chloro-1,3-butadiene and 2-methyl-1,3-butadiene (isoprene). Among them, 1,3-butadiene is particularly preferable.

A further olefinic rubber suitable in the invention is natural rubber. The main constituent of natural rubber is the linear polymer cis-1,4-polyisoprene. It is normally crepe. Synthetic polyisoprene, polychloroprene and polybutadiene rubber can also be used.

Moreover, copolymers of the above-mentioned conjugated dienes with monoolefins as comonomer can be used. These monoolefins are selected from the group consisting of styrene, para-$C_{1-4}$-alkyl styrenes and (meth)acrylonitriles. Preferred para-$C_{1-4}$-alkyl styrenes are p-methyl-, p-ethyl-, p-propyl-, p-isopropyl and p-butyl-styrene. A specific example is styrene-butadiene random copolymer rubber (SBR). Further examples are styrene-butadiene-styrene block copolymer (SBS), styrene-isoprene-styrene block copolymer (SIS) and styrene-isoprene-butadiene-styrene block copolymer (SIBS).

Further suitable rubber are nitrile rubbers. Examples of the nitrile group-containing rubber include a copolymer rubber comprising a (meth)acrylonitrile compound and a conjugated diene of those mentioned above such as acrylonitrile-butadiene copolymers (NBR). Further, the copolymer rubber may be one in which the conjugated diene units of the copolymer rubber are hydrogenated.

Specific examples of the ethylenically unsaturated nitrile compound include acrylonitrile, $\alpha$-chloroacrylonitrile, $\alpha$-fluoroacrylonitrile and methacrylonitrile. Among them, acrylonitrile is particularly preferred.

Especially preferred nitrile rubbers comprise copolymer of 1,3-butadiene and about 10 to about 50 percent of acrylonitrile.

Other suitable rubbers for use in the present invention are based on polychlorinated conjugated dienes, preferably butadienes such as polychloroprene rubber. These rubbers are commercially available under the trade names Neoprene$^{®}$ and Bayprene$^{®}$.

### (c) Processing oil

The rubber processing oils (c) generally are paraffinic, naphthenic or aromatic oils derived from petroleum fractions. The type of the oil will be that ordinarily used in conjunction with the specific rubber or rubbers present in the composition. Mixtures of processing oils can be used as well.

### (d) Curatives

Any known cure system for the rubber can be used as long as it is suitable under the vulcanization conditions with the specific olefinic rubber or combination of rubbers being used and with the polyolefin.

The different rubbers present in the composition can be co-vulcanized by using a common curative for all of them or can be vulcanized separately at the same time using the selective curative for each rubber or can be vulcanized separately at different mixing time by using the selective curative for each rubber. Thus, the rubbers may be present in the composition independently from each other fully cured or at least partially cured. The curatives include sulfur, sulfur donors, metal oxides, phenolic resin systems, peroxide-based systems and the like, both with and without accelerators and co-agents.

Preferred are phenolic curative systems which at least partially, preferably fully cure EPDM rubbers. A basic ingredient of such system is a phenolic curing resin made by condensation of halogen substituted phenol with an aldehyde, preferably, formaldehyde, in an alkaline medium or by condensation of bi-functional phenoldialcohols. Dimethylol phenols substituted in the para-position with $C_5$-$C_{10}$ alkyl groups are preferred. Halogenated alkyl substituted phenol curing resin prepared by halogenation of alkyl substituted phenol curing resin are also especially suitable. Phenolic curative systems comprising methylol phenolic resins, halogen donor and metal compound are especially recommended, details of which are described in Giller, US-A-3 287 440 and Gerstin et al, US-A-3 709 840. Non-halogenated phenol curing resins are used in conjunction with halogen donors, preferably, along with a hydrogen halide scavenger. Ordinarily, halogenated, preferably brominated, phenolic resins containing 2 to 10 weight percent bromide, do not require halogen donor but are used in conjunction with a hydrogen halide scavenger such as metal oxides such as iron oxide, titanium oxide, magnesium oxide, magnesium silicate, silicon dioxide and preferably zinc oxide, the presence of which promotes the cross-linking function of the phenolic resin, however, with rubbers which do not readily cure with phenolic resin, the conjoint use of a halogen donor and zinc oxide is recommended. The preparation of halogenated phenol resins and their use in a curative system with zinc oxide are described in US-A-2 972 600 and 3 093 613, the disclosure of which along with the disclosure of the aforesaid Giller and Gerstin patents are incorporated herein by reference. Examples of suitable halogen donors are stannous chloride, ferric chloride, or halogen donating polymers such as chlorinated paraffin, chlorinated polyethylene, chlorosulfonated polyethylene, and polychlorobutadiene (neoprene rubber). The term "activator" as used herein means any material which materially increases the cross-linking efficiency of the phenolic curing resin and includes metal oxides and halogen donors either used alone or conjointly. Further additional catalysts (promoters) for the phenolic resin curative are p-toluene sulfonic acid and salicylic acid. For further details of phenolic curative systems see "Vulcanization and Vulcanizing Agents," W. Hoffmann, Palmerton Publishing Company. Suitable phenolic curing resins and brominated phenolic curing resins are commercially available, for example, such resins may be purchased under the trade names SP-1045, CRJ-352, SP-1055 and SP-1056 from Schenectady Chemicals, Inc. Similar functionally equivalent phenolic curing resins may be obtained from other suppliers. As explained above, sufficient quantities of curative are used to achieve at least partial, preferably essentially complete cure of the rubber.

The amount of curative depends on the type of curative and the composition of the blend. Enough curative be used to at least partially, preferably fully cure all the rubbers present in the composition.

### (e) Additives

In addition to the polyolefin (a), the rubbers (b) and the processing oils (c) the thermoplastic elastomer blends to be cured also include the curatives (d) as mentioned above to prepare the at least partially, preferably fully cured thermoplastic elastomer composition of the invention. The cured thermoplastic elastomer composition may also comprise additives such as reinforcing and non-reinforcing fillers, plasticizers, antioxidants, stabilizers lubricants, anti-blocking agents, antistatic agents, waxes, foaming agents, pigments, flame retardants and other processing aids known in the rubber compounding art. Such additives can comprise up to about 65% by weight of the total composition of polyolefins (a), rubbers (b), processing oils (c), curatives (d) and additives (e). Fillers and extenders which can be utilized include conventional inorganics such as calcium carbonate, clays, silica, talc, titanium dioxide, carbon black and the like.

## II. Processing

The present invention also pertains to a method for the preparation of the soft thermoplastic elastomer composition as described above said method comprising

- blending in the amounts indicated above

> (a) a combination of at least one thermoplastic polyolefin resin,
> (b)
>
> > (i) at least one rubber selected from monoolefin copolymer rubbers with
> > (ii) at least one rubber selected from homopolymers or copolymers of conjugated dienes, copolymers of a conjugated diene with a monoolefin, and mixtures thereof,
>
> (c) at least one processing oil,
> (d) at least one curative and
> (e) optional additives

- at least partially dynamically vulcanizing (curing) the rubbers in the resulting mixture under dynamic vulcanization conditions. Preferably, the rubbers are fully dynamically vulcanized.

The olefin rubber component of the thermoplastic elastomer is generally present as small, i.e. micro-size particles within a continuous polyolefin matrix, although a co-continuous morphology is also possible depending on the amount of rubber relative to plastic with or without rubber curing, and the cure system or if the rubber is cured. The rubbers present in the composition of the present invention are fully crosslinked (cured).

Partial, preferably full crosslinking can be achieved by adding an appropriate rubber curative to the blend of polyolefin (a) and rubbers (b) and fully vulcanizing the rubber under conventional vulcanizing conditions. However, it is preferred that the rubber be crosslinked by the process of dynamic vulcanization. As used in the specification and claims, the term "dynamic vulcanization" means a vulcanization or curing process for a rubber contained in a thermoplastic elastomer composition, wherein the rubber is vulcanized under conditions of high shear at a temperature above the melting point of the polyolefin component. The rubber is thus simultaneously crosslinked and dispersed as fine particles within the polyolefin matrix, although as noted above other morphologies may also exist. Dynamic vulcanization is effected by mixing the thermoplastic elastomer components at elevated temperature in conventional mixing equipment such as roll mills, Banbury mixers, Brabender mixers, continuous mixers, mixing extruders and the like. The unique characteristic of dynamically cured compositions is that, notwithstanding the fact that the rubber component is at least partialy, preferably fully cured, the compositions can be processed and reprocessed by conventional plastic processing techniques such as extrusion, injection molding and compressing molding. Scrap or flashing can be salvaged and reprocessed.

In the practice of this invention, a thermoplastic polyolefin resin (a) is mixed with the rubber combination (b) at a temperature sufficient to soften the resin or, more commonly, at a temperature above its melting point where the resin is crystalline at room temperature. After the resin and the rubber are intimately mixed, the curative is added. The processing oil (c) can be added before or after curing or can be added in part before and in part after curing. The sequence of ingredient addition may vary, but generally all of the fillers should be added before substantial cross-linking, or vulcanization, occurs. The stabilizers and plasticizers may be added either before or after vulcanization.

Heating and masticating with shearing at vulcanization temperature are generally adequate to complete vulcanization in 0.5 to 10 minutes. The vulcanization time can be reduced by elevating the temperature of vulcanization. A suitable range of vulcanization temperatures is from about 100 °C (the peak melting point of the resin, e.g. 130 °C for HDPE and 165 °C for PP) to about 250 °C; more typically, the temperature range is from about 160 °C to about 225 °C. Preferably the vulcanization is carried out at a temperature ranging from about 170 °C to about 200 °C.

The terms "fully vulcanized" and "completely vulcanized" as used herein means that the rubber component to be vulcanized has been cured to a state in which the elastomeric properties of the crosslinked rubber are similar to those of the rubber in its conventional vulcanized state, apart from the thermoplastic elastomer composition. The degree of cure can be described in terms of gel content or, conversely, extractable components. Alternatively the degree of cure may be expressed in terms of crosslink density. All of these descriptions are well known in the art, for example from US-A-5 100 947 and 5 157 081.

The TPE composition of the present invention can be used in a very broad field of applications such as automotive, medical, appliance, hardware, electrical and constructions, i.e. everywhere a very soft sealing part is needed.

The soft TPEs of the present invention show good physical properties and good processability like extrusion and injection molding (see Tables 1 and 2). It has been demonstrated that the total replacement of EPDM (rubber (i)) by poly-conjugated diene rubber (ii) leads to an unprocessable product and consequently, the presence of EPDM rubber (see Table 1, Run 5) with at least one poly-conjugated diene rubber (ii) in the amount indicated above is necessary to obtain the soft final product with good physical processing properties (see Tables 1 to 4). Minimum hardness achieved without these poly-conjugated diene monomers was 48 Shore A (see Tables 1-2, Run 4).

Several trials indicate that such very soft TPE with good processing properties cannot be made via formulations containing only monoolefin copolymer rubbers, e.g. EPDM as rubber phase (see Tables 5 and 6) and PP as thermoplastic phase.

The invention will be better understood by reference to the following examples which serve to illustrate but not limit the present invention.

Examples

1. Experiments

The preparation of the soft TPEs of the present invention has been accomplished by covulcanization of the rubbers as described in the above specification. The rubbers employed in the examples have been fully cured. The compositions and the properties of the obtained products are shown in the following Tables 1 to 6.

Unless otherwise stated all amounts given in the following tables are in weight parts.

Table 1

| Composition | | | | | |
|---|---|---|---|---|---|
| | Run 1 | Run 2 | Run 3 | Run 4 (Comp.) | Run 5 (Comp.) |
| V 3666 (EPDM), b(i) | 26.82 | 26.82 | 26.82 | 51.82 | - |
| RP 210 (Eltex P) | 7.77 | 7.77 | 7.77 | 7.77 | 7.77 |
| Flexon 876 | 35.17 | 35.17 | 35.17 | 24.47 | 43.68 |
| Translink 37 | 10.74 | 10.74 | 10.74 | 11.56 | 11.56 |
| Irganox 1010 | 0.20 | 0.20 | 0.20 | 0.20 | 0.20 |
| PP C-Black MB (30%) | 1.44 | 1.44 | 1.44 | 1.44 | 1.44 |
| ZnO | 1.40 | 1.40 | 1.40 | 0.58 | 0.58 |
| SP 1045 | 1.40 | 1.40 | 1.40 | 1.40 | 1.40 |
| $SnCl_2$ | 0.36 | 0.36 | 0.36 | 0.36 | 0.36 |
| Tinuvin 770 | 0.20 | 0.20 | 0.20 | 0.20 | 0.20 |
| Ultranox 626 | 0.20 | 0.20 | 0.20 | 0.20 | 0.20 |
| Cariflex 1220 (BR), b(ii) | 14.30 | 0.00 | 0.00 | - | 32.61 |
| SBR 1500, b(ii) | 0.00 | 14.30 | 0.00 | - | - |
| Neoprene WTR (CR), b(ii) | 0.00 | 0.00 | 14.30 | - | - |
| b(i)[1]/b(ii) | 51.72/48.28 | 51.72/48.28 | 51.72/48.28 | 100 | 0 |
| Extrusion on Haake[2] (Flap Strip) | | | | | |
| Surface Aspect Edge Aspect | Good Good | Good Good | Good Good | Good Good | Impossibe to extrude and to injection mold |
| Injection KM 90 Plate 2.7 mm Aspect | Good | Good | Good | Good | |

[1] Pure rubber b(i) without extender oil

[2] A laboratory extruder Haake, type rheocord system 90 (19 mm barrel diameter, L/D = 25/1) using a PE screw with a compression ratio of 4:1 was used for extrusion. Temperature profile was 180 (feeding zone) - 190 - 195 - 200 °C (die). A flap strip of 20 mm wide and 2 mm thickness was extruded at 100 RPM. Physical properties were evaluated on the plaques of 115 x 85 x 2.7 mm injection molded on a Krauss Maffei type KM 90-340B machine.

## Table 2

## Properties

|  | Run 1 | Run 2 | S 111-45 | Run 3 | Run 4 |
|---|---|---|---|---|---|
| Hardness<br>Shore A 5 sec.<br>(ASTM D 2240) | 34 | 36 | 49 | 36 | 48 |
| Modulus at 100 % (MPa)<br>Modulus at 300 % (MPa)<br>Elongation at break (%)<br>Tensile strength at<br>break (MPa) (ASTM D 412) | 0.90<br>2.10<br>323<br>2.40 | 1.00<br>2.10<br>390<br>2.60 | 1.50<br><br>324<br>3.30 | 0.90<br>2.00<br>390<br>2.50 | 1.30<br><br>311<br>3.50 |
| Tear strength at break<br>(N/mm)<br><br>(ASTM D 624 die C) | 11 | 14 | 18 | 14 | 18 |
| Tension Set 200%<br>(ASTM D 412) | 11 | 11.50 | 18 | 11.5 | 11 |
| Rebound (DIN 53512) | 50 | 44 | 53 | 47 | 54 |
| Compression Set<br>(ASTM D 395)<br><br>48 hrs at R.T.<br>48 hrs at 70 °C | <br><br><br>19<br>38 | <br><br><br>21<br>33 | <br><br><br>21<br>35 | <br><br><br>21<br>36 | <br><br><br>15<br>32 |

(a) Effect of different ratios of EPDM rubber/poly-conjugated diene

Additional experimentations were done only with SBR as poly-conjugated diene monomer rubber and at two ratios of pure EPDM rubber (without extender oil)/SBR = 75/25 and 25/75.

Formulation with very high EPDM/SBR ratio (75/25, Run 6, Table 3) showed hardness of 41 Shore A with good processing/properties. Formulations with very high level of poly-conjugated diene has been made in two pass mixing due to high level of oil incorporated. So Run 7 (Table 3) illustrates the composition of first mixing pass and Run 8 (Table 3) illustrates the final composition (second mixing pass).

For further details it is referred to Tables 3 and 4.

Table 3

| Formulation Very soft TPE : Effect of different ratios of EPDM rubber/poly-conjugated diene rubber | | | |
|---|---|---|---|
| | Run 6 | Run 7 | Run 8 |
| V 3666 (EPDM), b(i) | 38.85 | 17.89 | 0.00 |
| RP 210 (Eltex P) | 7.77 | 10.74 | 0.00 |
| Flexon 876 | 30.04 | 18.94 | 27.43 |
| Translink 37 | 10.74 | 14.85 | 0.00 |
| Irganox 1010 | 0.20 | 0.28 | 0.00 |
| PP C-Black MB (30%) | 1.44 | 1.99 | 0.00 |
| ZnO | 1.40 | 1.93 | 0.00 |
| SP 1045 | 1.40 | 1.93 | 0.00 |
| $SnCl_2$ | 0.36 | 0.50 | 0.00 |
| Tinuvin 770 | 0.20 | - | 0.20 |
| Ultranox 626 | 0.20 | 0.28 | 0.00 |
| SBR 1500, b(ii) | 7.40 | 30.67 | 72.37 |
| Run 7 - composition | | | 72.37 |
| b(i)*/b(ii) | 75/25 | 25/75 | 25/75 |

* Pure rubber b(i) without extender oil

Table 4

| Physical Properties | | |
|---|---|---|
| | Run 6 | Run 9 |
| Hardness | | |
| Shore A 5 sec. | 41 | 32 |
| Modulus at 100 % (MPa) | 1.10 | 0.80 |
| Elongation at break (%) | 291 | 289 |
| Tensile strength at break (MPa) | 2.70 | 1.40 |
| Tear strength at break (N/mm) | 14 | 9 |
| Compression Set | | |
| 48 hrs at R.T. | 15 | 22 |
| 48 hrs at 70°C | 31 | 41 |
| Processing Extrusion on Haake (Flap strip) | | |
| Surface Aspect | Good | Bad |
| Edge Aspect | Good | Bad |
| Injection KM 90 Plate 2.7 mm | | |
| Aspect | Good | Good |

(b)Infeasibility to make a very soft material using only EPDM as the only rubber component

The infeasibility to make a very soft material by using EPDM as the only rubber component has been demonstrated by the following experimentation in which the level of major components supposed to influence hardness like PP, oil, filler was changed.

Also PP reactor copolymer which is supposed to give a soften material was used in the test:

Formulations with less PP (Run 9, Table 5), as well as formulations with more oil, less pp and less mineral filler (Run 10, Table 5) both showed low hardness but bad processability (extrusion/injection molding) and poor physical properties. Also formulations with more oil and less mineral filler (Run 11, Table 5) showed low hardness but bad processability.

For further details it is referred to Tables 5 and 6.

## Table 5

## Formulation

## Very soft TPE : EPDM-based formulations
### (not according to the invention)

|  | Run 9 | Run 10 | Run 11 |
|---|---|---|---|
| V 3666 (EPDM), phr | 51.82 | 51.82 | 51.82 |
| RP 210 (Eltex P) | 6.00 | 6.00 | 7.77 |
| Flexon 876 | 24.47 | 30.47 | 30.47 |
| Translink 37 | 13.21 | 7.21 | 5.44 |
| Irganox 1010 | 0.20 | 0.20 | 0.20 |
| PP C-Black MB (30%) | 1.44 | 1.44 | 1.44 |
| ZnO | 1.40 | 1.40 | 1.40 |
| SP 1045 | 0.70 | 0.70 | 0.70 |
| SnCl$_2$ | 0.36 | 0.36 | 0.36 |
| Tinuvin 770 | 0.20 | 0.20 | 0.20 |
| Ultranox 626 | 0.20 | 0.20 | 0.20 |

Table 6

| Physical Properties | | | |
|---|---|---|---|
| | Run 9 | Run 10 | Run 11 |
| Hardness | | | |
| Shore A 5 sec. | 37 | 33 | 37 |
| Direction | | | |
| Modulus at 100 % (MPa) | 1.00 | 0.80 | 0.90 |
| Modulus at 300 % (MPa) | | | 2.30 |
| Elongation at break (%) | 239 | 266 | 337 |
| Tensile strength at break (MPa) | 1.90 | 1.80 | 2.60 |
| Tear strength at break (N/mm) | 14 | 14 | 16 |
| Compression Set | | | |
| 48 hrs at R.T. | 17 | 17 | 18 |
| 48 hrs at 70°C | 30 | 29 | 34 |
| Processing Extrusion on Haake (Flap strip) | | | |
| Surface Aspect | Rough | Rough | Rough |
| Edge Aspect | Bad | Rough | Poor |
| Injection KM 90 Plate 2.7 mm | | | |
| Aspect | Bad | Bad | Bad |

2. Materials

- V 3666 is an oil extended EPDM (42.9% by weight oil) and is obtainable from Exxon Chemical, a compound of the type b(i)

- RP 210 is Eltex PRP 210 is PP and is obtainable from Solvay

- Flexon® 876 is a paraffinic process oil and is obtainable from Exxon Chemical

- Translink® 37 is a silane coated calcinated clay and is obtainable from Engelhard

- Irganox® 1010 is a phenolic stabilizer Tetrakis[(methylen(3,5-di-tert.-butyl-4-hydroxyhydro-cinnamate)])methane and is obtainable from Ciba-Geigy

- PP C-Black MB (30%) is a carbon black master batch in PP and is obtainable from Degussa

- SP 1045 is a phenolic resin and is obtainable from Schenectady

- Tinuvin® 770 is a sterically hindered amine as UV-stabilizer and is obtainable from Ciba-Geigy

- Ultranox® 626 is Bis(2,4-di-t-butylphenol)pentaerythritol diphosphite and is obtainable from Borg Warner

- Cariflex® 1220 (BR) is polybutadiene and is obtainable from Shell, a compound of the type b(ii)

- SBR 1500 is styrene-butadiene rubber and is obtainable from Hüls or Polysar, a compound of the type b(ii)

- Neoprene WTR (CR) is (poly(2-chlorobutadiene)) and is obtainable from Du Pont, a compound of the type b(ii)

- Free oil is paraffinic process oil and is obtainable from Exxon Chemical

- S 111-45 is a thermoplastic elastomer and is obtainable from Advanced Elastomer Systems under the tradename Santoprene®

**Claims**

1. A soft thermoplastic elastomer composition comprising a blend of

  (a) less than about 40% to about 15% by weight, based on the amount of (a)+(b), of at least one thermoplastic polyolefin resin
  (b) more than about 60% to about 85% by weight, based on the amount of (a)+(b), of a combination of

    (i) at least one at least partially cured rubber selected from monoolefin copolymers and
    (ii) at least one at least partially cured rubber selected from homopolymers or copolymers of conjugated dienes, copolymers of a conjugated diene with a monoolefin, and mixtures thereof,

    and
  (c) about 30% to 70% by weight, based on the amount of (a)+(b)+(c) , of at least one processing oil.

2. The soft thermoplastic elastomer composition of claim 1 wherein the rubbers (b)(i) and/or (b)(ii) are fully cured.

3. The soft thermoplastic elastomer composition of claim 1 or 2 having a Shore A hardness of about 20 to about 60.

4. The soft thermoplastic elastomer composition of any one of claims 1 to 3 wherein the thermoplastic polyolefin resin is selected from homopolymers and copolymers of monoolefin monomers having 2 to 7 carbon atoms or mixtures thereof or copolymers of said monomers with (meth)acrylates and/or vinylacetates.

5. The soft thermoplastic elastomer composition of any one of claims 1 to 4 wherein the monoolefin copolymer rubber (b)(i) is selected from

  - ethylene-propylene copolymer rubber (EPM)
  - ethylene-propylene-non-conjugated diene terpolymer rubber (EPDM).

6. The soft thermoplastic elastomer composition of any one of claims 1 to 5 wherein for the fully cured rubber (b)(ii) the conjugated dienes contain 4 to 14 carbon atoms and the monoolefin-comonomer is selected from the group consisting of styrene, para-$C_{1-4}$-alkyl styrenes and (meth)acrylonitriles.

7. The soft thermoplastic elastomer composition according to any one of claims 1 to 6, wherein

  - the homopolymers are selected from polybutadiene, natural rubber, polychloroprene, polyisoprene;
  - the copolymers of conjugated dienes are selected from styrene-butadiene random copolymer rubber (SBR), acrylonitrile-butadiene copolymer (NBR);
  - the copolymers of the conjugated diene with a monoolefin-comonomer are selected from styrene-butadiene and/or isoprene-styrene block copolymer.

8. The soft thermoplastic elastomer composition of any one of claims 1 to 7 characterized in that the combination of rubbers (b) contains about 10 to about 90 % by weight of the monoolefin copolymer rubber (i) and about 90 to about 10 % by weight of the homopolymer or copolymer rubber of the conjugated diene (ii), based on the amount of rubbers (b)(i) + (b)(ii).

9. A method for the preparation of the soft thermoplastic elastomer composition of any one of the claims 1 to 8 said method comprising

  - blending

    (a) a combination of at least one thermoplastic polyolefin resin,

(b)

    (i) at least one rubber selected from monoolefin copolymer rubbers with
    (ii) at least one rubber selected from homopolymers or copolymers of conjugated dienes, copolymers of a conjugated diene with a monoolefin, and mixtures thereof,

(c) at least one processing oil,
(d) at least one curative and
(e) optional additives

- at least partially dynamically vulcanizing (curing) the rubber in the resulting mixture under dynamic vulcanization conditions.

10. The method of claim 9 comprising the step of fully dynamically vulcanizing the rubbers (b)(i) and/or (b)(ii).

11. The method of claim 9 or 10 characterized in that the combination of rubbers (b) contains about 10 to about 90 % by weight of the monoolefin copolymer rubber (i) and about 90 to about 10 % by weight of the homopolymer or copolymers of the conjugated diene (ii), based on the amount of (b)(i)+(b)(ii).

12. The method of any one of claims 9 to 11, wherein the thermoplastic polyolefin resin is selected from homo polymers and copolymers of monoolefin monomers having 2 to 7 carbon atoms or mixtures thereof or copolymers of said monomers with (meth)acrylates and/or vinylacetates.

13. The method of any one of claims 9 to 12, wherein the monoolefin copolymer rubber (b)(i) is selected from

- ethylene-propylene copolymer rubber (EPM)
- ethylene-propylene-non-conjugated diene terpolymer rubber (EPDM).

14. The method of any one of claims 9 to 13, wherein for the fully cured rubber (b)(ii) the conjugated dienes contain 4 to 14 carbon atoms and the monoolefin-comonomer is selected from the group consisting of styrene, para-$C_{1-4}$-alkyl styrenes and (meth) acrylonitriles.

15. The method of anyone of claims 9 to 14, wherein

- the homopolymers are selected from polybutadiene, natural rubber, polychloroprene, polyisoprene;
- the copolymers of conjugated dienes are selected from styrene-butadiene random copolymer rubber (SBR), acrylonitrile-butadiene copolymer (NBR);
- the copolymers of the conjugated diene with a monoolefin-comonomer are selected from styrene-butadiene and/or isoprene-styrene block copolymer.

16. The method of any one of claims 9 to 15, wherein the step of dynamically vulcanizing is carried out within a temperature in the range of about 100 °C and about 250 °C.

EP 0 757 077 A1

**European Patent Office**

# EUROPEAN SEARCH REPORT

Application Number

EP 95 11 2043

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | GB-A-2 011 430 (UNIROYAL INC) 11 July 1979 * claims; table II * --- | 1-16 | C08L23/16 C08L9/00 C08L91/00 |
| A | EP-A-0 452 089 (SUMITOMO CHEMICAL CO) 16 October 1991 * claims; table 1 * --- | 1-16 | |
| A | DATABASE WPI Section Ch, Week 9512 Derwent Publications Ltd., London, GB; Class A18, AN 95-085550 & JP-A-07 011 067 ( KURARAY CO LTD) , 13 January 1995 * abstract * ----- | 1-16 | |

TECHNICAL FIELDS
SEARCHED (Int.Cl.6)

C08L

The present search report has been drawn up for all claims

| Place of search | Date of completion of the search | Examiner |
|---|---|---|
| THE HAGUE | 9 January 1996 | Clemente Garcia, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document